# EUROPÄISCHE PATENTANMELDUNG

(11) **EP 2 088 733 A1**
(43) Veröffentlichungstag der Anmeldung: **12.08.2009**
(21) Anmeldenummer: 08002223.9
(22) Anmeldetag: 07.02.2008
(51) Int. Cl.: H04L 29/06

(54) **Verfahren und Vorrichtung für die Steuerung und/oder Überwachung einer Gruppe von Gebäudetechnikkomponenten mit einem reduntanten Server-Konzept**

(71) Anmelder: Siemens Schweiz AG, 8047 Zürich (CH)
(72) Erfinder: Helfenstein, Urs, 6018 Buttisholz (CH); Fabrinetti, Duilio, 6330 Cham (CH)
(74) Vertreter: Fischer, Michael

(57) **Zusammenfassung**

Erfindungsgemäss werden eine Vorrichtung und ein Verfahren für die Steuerung und/oder Überwachung einer Gruppe von Gebäudetechnikkomponenten, wie z.B. Klimazentrale, Brandmelder, Eindringverhinderung, Videoüberwachung, mit den folgenden Verfahrensschritten offenbart ist:
a) Bereitstellen von mindestens zwei Server, die jeweils redundante Kommunikationswege zu den Gebäudetechnikkomponenten (4 bis 8) zur Verfügung stellen;
b) Ausführen einer ersten Anwendung für die Erzeugung und den Betrieb eines virtuellen Servers,
c) Ausführen einer zweiten für die Steuerung und/oder Überwachung der Gruppe von Gebäudetechnikkomponenten (4 bis 8) spezifizierten Anwendung,
d) Ausführen einer dritten Anwendung für die Synchronisation der virtuellen Daten-Speicher und die Überwachung der Server-Adressen, und
e) Ausführen einer vierten Anwendung zur Auswahl eines für die Steuerung und/oder Überwachung der Gruppe der Gebäudetechnikkomponenten (4 bis 8) massgeblichen Servers (20, 22) und zur Überwachung und Visualisierung des Status einer Serverredundanz sowie zum Ausführen der mit einem gewollten oder ungewollten Ausfalls eines der Server (20, 22) verbundenen Eingriffe in die auf den Servern ausgeführten Anwendungen.

## Beschreibung

Die vorliegende Erfindung betrifft ein Verfahren und eine Vorrichtung für die Steuerung und/oder Überwachung einer Gruppe von Gebäudetechnikkomponenten unter Einsatz eines redundanten Server-Konzepts.

Moderne Gebäude weisen heutzutage einen hohen Standard hinsichtlich der Gebäudeautomation auf. Klimazentralen und Heizanlagen sind regelungstechnisch gesteuert, um in den Räumen die gewünschten Raumbedingungen zu schaffen. Dies gilt auch für Beschattungseinrichtung, die sonnenstandabhängig eingestellt werden. Weitere Gebäudetechnikkomponenten sind beispielsweise Überwachungskameras, Türsensoren, Fenstersensoren, Einbrucherkennungssystem, Bewegungsmelder und dergleichen. All diese Gebäudetechnikkomponenten werden signaltechnisch an Gebäudeautomationssysteme angeschlossen, die einerseits die Steuerung vornehmen und andererseits auch das gesamte Fehler- und Alarmmanagement ausführen.

Für die Sicherstellung der Gebäudeautomation ist es daher leicht nachvollziehbar, dass die Gebäudeautomationssysteme sehr zuverlässig arbeiten müssen und auch das gesamte Fehler- und Alarmmanagement schnell und störungsfrei zu funktionieren hat, da es ansonsten bei verzögerter Reaktion zu Sach- und/oder Personenschäden kommen könnte.

Aus diesem Grunde sind für die Anwendungen häufig redundante Systeme vorgesehen, die im Falle von Störungen immer noch über mindestens ein intaktes Gebäudeautomationssystem verfügen, während das oder die anderen Systeme repariert, gewartet, aktualisiert oder sonst wie im Hintergrund genutzt werden können. Die Aufgabe der Herstellung der Redundanz erfordert jedoch in der Regel hohe Aufwendungen hinsichtlich der Synchronisation der Anwendungen, des Datentransfers, der Datenhaltung und der Wiederherstellung der Redundanz nach einem Server-Ausfall. Zum Management der Redundanz gibt es besonders im Bereich der Gebäudeautomation derzeit keine zufriedenstellenden Anwendungen, da im besonderen auch die Datenprotokolle der unterschiedlichen Hersteller von Gebäudetechnikkomponenten und Gebäudeautomationssystemen unterstützen würden und hinsichtlich des Handlings und der Funktionalität die Bedürfnisse der Gebäudeautomation voll erfüllen können. Zudem erschwert die Abhängigkeit von der eingesetzten Hard- und Software sowie die Abhängigkeit von der gewählten IT-Infrastruktur diese Aufgabe weiter erheblich.

Der vorliegenden Erfindung liegt daher die Aufgabe zugrunde, ein Verfahren und eine Vorrichtung für die Steuerung und/oder Überwachung einer Gruppe von Gebäudetechnikkomponenten unter Einsatz eines redundanten Server-Konzepts anzugeben, die es erlauben, die Redundanz eines Gebäudeautomationssystems in gut strukturierter und von der eingesetzen Hard- und Software unabhängiger Weise zu lösen.

Die Aufgabe wird bezüglich der Vorrichtung erfindungsgemäss durch eine Vorrichtung für die Steuerung und/oder Überwachung einer Gruppe von Gebäudetechnikkomponenten, wie z.B. Klimazentrale, Brandmelder, Eindringverhinderung, Videoüberwachung, mit mindestens zwei Servern (22, 24), die jeweils redundante Kommunikationswege zu den Gebäudetechnikkomponenten (4 bis 8) zur Verfügung stellen und auf denen die nachfolgend genannten Anwendungen ausführbar sind:
a) eine erste Anwendung für ein Betriebssystem (OS1 W3K, OS2 W3K) und zur Erzeugung eines virtuellen Servers (30),
b) eine zweite für die Steuerung und/oder Überwachung der Gruppe von Gebäudetechnikkomponenten (4 bis 8) spezifizierte Anwendung,
c) eine dritte Anwendung für die Synchronisation der virtuellen Daten-Speicher (VM HD-DISQL) und die Überwachung der Server-Adressen ausführbar ist , und
d) eine vierte Anwendung zur Auswahl eines für die Steuerung und/oder Überwachung der Gruppe der Gebäudetechnikkomponenten (4 bis 8) massgeblichen Servers (22) und zur Überwachung und Visualisierung des Status einer Serverredundanz sowie zum Ausführen der mit einem gewollten oder ungewollten Ausfalls eines der Server verbundenen Eingriffe (1A bis 5A, 1P bis 5P) in die auf den Servern (22, 24) ausgeführten Anwendungen.

Bezüglich des Verfahrens wird diese Aufgabe erfindungsgemäss durch ein Verfahren für die Steuerung und/oder Überwachung einer Gruppe von Gebäudetechnikkomponenten, wie z.B. Klimazentrale, Brandmelder, Eindringverhinderung, Videoüberwachung, mit den folgenden Verfahrensschritten:
a) Bereitstellen von mindestens zwei Server, die jeweils redundante Kommunikationswege zu den Gebäudetechnikkomponenten (4 bis 8) zur Verfügung stellen;
b) Ausführen einer ersten Anwendung für die Erzeugung und den Betrieb eines virtuellen Servers,
c) Ausführen einer zweiten für die Steuerung und/oder Überwachung der Gruppe von Gebäudetechnikkomponenten (4 bis 8) spezifizierten Anwendung,
d) Ausführen einer dritten Anwendung für die Synchronisation der virtuellen Daten-Speicher und die Überwachung der Server-Adressen, und
e) Ausführen einer vierten Anwendung zur Auswahl eines für die Steuerung und/oder Überwachung der Gruppe der Gebäudetechnikkomponenten (4 bis 8) massgeblichen Servers (20, 22) und zur Überwachung und Visualisierung des Status einer Serverredundanz sowie zum Ausführen der mit einem gewollten oder ungewollten Ausfalls eines der Server (20, 22) verbundenen Eingriffe in die auf den Servern ausgeführten Anwendungen.

Auf diese Weise werden eine Vorrichtung und ein Verfahren bereitgestellt, die es ermöglichen, die Redundanz des Systems unabhängig von der eingesetzten Hard- und Software und in anschaulicher Weise managen zu können. Im besonderen besteht nun keine ausführungstechnisch relevante Abhängigkeit von der für die Steuerung und/oder die Überwachung der Gebäudetechnikkompenenten eingesetzten Routinen mehr. Der Einsatz eines virtuellen Servers und virtueller Datenspeicher ermöglicht so die hohe Flexibilität und Immunität des Systems gegenüber Hardware- und sonstigen Systemausfälle. Weiter ist es sogar möglich, auf den verschiedenen Servern sogar unterschiedliche Versionen der für die Steuerung und/oder die Überwachung der Gebäudetechnikkompenenten eingesetzten Routinen ausführen zu können; dies unter der Voraussetzung, dass die unterschiedlichen Versionen die gleichen Datenbankversionen unterstützen.

Um für die Kommunikation der verschiedenen Komponenten untereinander auf bestehende Infrastrukturen (Hard- wie Software) zurückgreifen zu können, werden die Adressen der der Server und des virtuellen OS als IP-Adressen ausgeführt. Damit kann die Kommunikation über die normale hochgradig standardisierte Netzwerkinfrastruktur erfolgen.

Zur besseren Gliederung der vorstehend genannten vierten Anwendung kann die vierte Anwendung so ausgestaltet sein, dass die Softwareroutinen zum Ausführen der mit einem gewollten oder ungewollten Ausfalls eines der Server verbundenen Eingriffe in die auf den Servern ausgeführten Anwendungen zwei Programmteile umfassen, von denen ein erster Programmteil dem aktiven Server und ein zweiter Programmteil dem oder den redundanten Servern zugeordnet ist. Diese Unterteilung erleichtert vor allen Dingen die Visualisierung der Systemzustände und hilft - besonders auch im Störungsfall
- die Übersichtlichkeit der erlaubten und nicht-erlaubten Massnahmen zu erhalten.

In zweckmässiger Ausgestaltung der Erfindung kann der erste Programmteil so ausgestaltet sein, dass die erste und die dritte Anwendung jeweils für sich start- und beendbar sind. Weiter kann der aktive Server mit allen für ihn vorgesehenen Anwendungen ohne ein Umschalten der Servers von dem aktiven in den passiven Status absichtlich (neu-)gestartet werden.

In zweckmässiger Ausgestaltung der Erfindung kann der zweite Programmteil entsprechend so ausgestaltet sein, dass die erste und zweite Anwendung auf dem passiven Server startbar und beendbar ist, die dritte Anwendung konfigurierbar ist,

Weitere vorteilhafte Ausgestaltungen der Erfindung sind den weiteren Unteransprüche entnehmbar.

Besonders bevorzugte Ausführungsbeispiele der Erfindung werden nachfolgend anhand der Zeichnung näher erläutert. Dabei zeigen:
- Figur 1: in schematischer Ansicht eine typische Topologie eines Netzwerks zur Steuerung von Gebäudetechnikkomponenten;
- Figur 2: in schematischer Ansicht zwei Server und redundante Kommunikationswege gemäss der Netzwerkdarstellung in Figur 1;
- Figur 3: einen Screen-Shot der Anwendung zur Auswahl eines für die Steuerung und/oder Überwachung der Gruppe der Gebäudetechnikkomponenten massgeblichen Servers und zur Überwachung und Visualisierung des Status einer Serverredundanz sowie zum Ausführen der mit einem gewollten oder ungewollten Ausfalls eines der Server verbundenen Eingriffe in die auf den Servern ausgeführten Anwendungen;
- Figur 4: eine Menü-Darstellung für die an dem aktiven Server in der Anwendung gemäss Figur 3 vorgesehenen Bedienoptionen; und
- Figur 5: eine Menü-Darstellung für die an dem passiven Server in der Anwendung gemäss Figur 3 vorgesehenen Bedienoptionen.

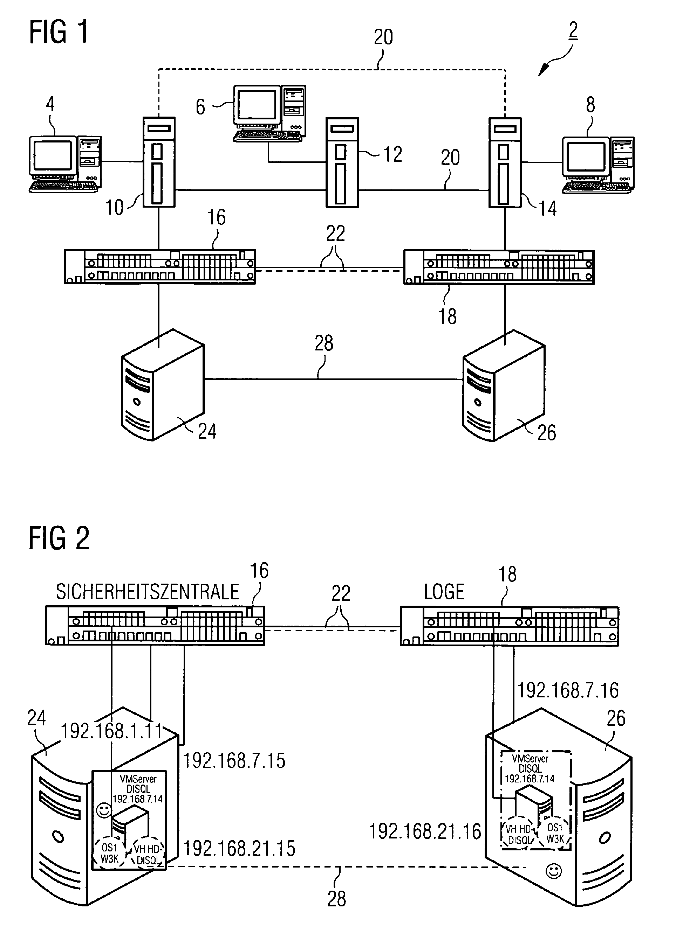

Figur 1 zeigt eine schematische Ansicht einer Topologie eines Netzwerks 2 zur Steuerung und Überwachung von Gebäudetechnikkomponenten 4, 6, 8. Die Gebäudetechnikkomponenten 4 bis 8 sind hier vorliegend selbst Managementstationen, an denen die gruppenweise gebäudetechnische Steuerung und Überwachung von den eigentliche Gebäudetechnikkomponenten, wie Klimazentralen, Lüftungsklappen, Lüftungsventilatoren, Temperatur- und Feuchtefühlern, Durchflusszählern, Heizanlagen, Bewegungsmeldern, Überwachungskameras, Tür- und Fenstersensoren usw. zusammengefasst ist. Die Gebäudekomponenten 4 bis 8 sind an Kommunikationsmodule 10, 12, 14 angeschlossen, die ihrerseits in einem redundant ausgeführten Netzwerkteil angeschlossen sind. Die Kommunikationsmodule 16, 18 verfügen ebenfalls über eine redundant ausgeführte Netzwerkverbindung 22. An jedem Kommunikationsmodule 16, 18 ist ein Server 24, 26 angeschlossen, wobei auch eine direkte Datenverbindung 28 zwischen den beiden Servern 24, 26 besteht.

Figur 2 zeigt nun in einer etwas detaillierteren Anwendung die beiden Kommunikationsmodule 16, 18 und die beiden Server 24, 26. Auf jedem der beiden Server 24, 26, die je vorliegend zwei eigene IP-Adressen aufweisen, wird eine erste Anwendung (VMServer) für die Erzeugung und Betriebs ein virtuelles Betriebssystem OS1, OS2, wie z.B. Windows W3K ausgeführt. Weiter wird eine zweite für die Steuerung und/oder Überwachung der Gruppe von Gebäudetechnikkomponenten spezifizierte Anwendung ausgeführt, wie z.B. eine SQLbasierte unter dem Handelsnamen DESIGO INSIGHT® der Firma Siemens AG erhältliche Anwendung. Eine dritte ausgeführte Anwendung synchronisiert die auf Vmware-basierten Daten-Speicher VM HD-DISQL. Dabei sind stets (über alle Server 24, 26 gesehen) zwei virtuelle Speicher VM HD-DISQL mit gleichen Datenbestand vorhanden. Eine dritte auf den Server 22, 24 ausgeführte Anwendung managt diese Synchronisation der virtuellen Datenspeicher VM HD-DISQL überwacht die Server-Adressen insofern, als diese Anwendung die Funktionalität und Erreichbarkeit der IP-Serveradressen überwacht. Ohne Anspruch auf Vollständigkeit wird auf den Servern 24, 26 zudem eine vierte Anwendung zur Auswahl eines für die Steuerung und/oder Überwachung der Gruppe der Gebäudetechnikkomponenten 4 bis 8 massgeblichen Servers 24, 26 und zur Überwachung und Visualisierung des Status einer Serverredundanz sowie zum Ausführen der mit einem gewollten oder ungewollten Ausfalls eines der Server 22, 24 verbundenen Eingriffe in die auf den Servern ausgeführten Anwendungen 22, 24.

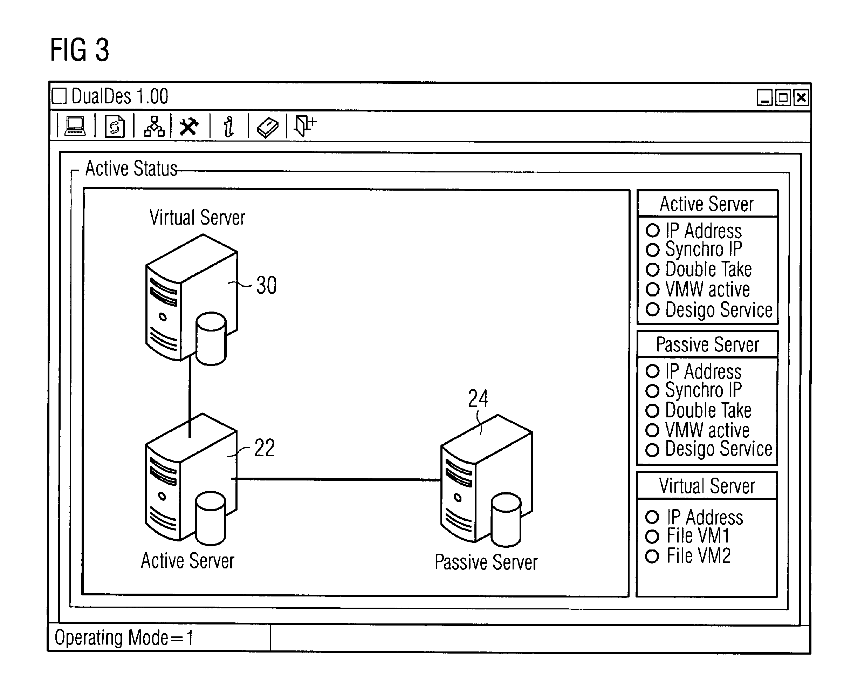

Figur 3 zeigt nun einen Screen-Shot der vierten Anwendung zur Auswahl eines für die Steuerung und/oder Überwachung der Gruppe der Gebäudetechnikkomponenten 4 bis 8 massgeblichen Servers 22, 24 und zur Überwachung und Visualisierung des Status einer Serverredundanz sowie zum Ausführen der mit einem gewollten oder ungewollten Ausfalls eines der Server 22, 24 verbundenen Eingriffe in die auf den Servern 22, 24 ausgeführten Anwendungen. Die Abbildung zeigt schematisch die beiden Server 22, 24 sowie den auf dem in diesem Ausführungsbeispiel aktiven Server 22 laufenden virtuellen Server 30 und die Verbindung 28 zwischen dem aktiven Server 22 und dem hier passiven Server 24. Am rechten Rand der Darstellung befinden sich zudem die wichtigsten Status informationen zu dem aktiven Server 22 (oben), dem passiven Server 24 (Mitte) und zu dem virtuellen Server 30 (unten). Für die beiden Server 22, 24 werden die Stati der IP-Adressen, der IP-Adresse der dritten Anwendung (hier Double Take®), der Server-Software VMWare® und der zweiten Anwendung für die Gebäudesteuerung und -überwachung angezeigt. Für den virtuellen Server 30 werden die Stati seiner IP-Adresse und die File VM1 und VM2 für die Identifikation der ausgeführten virtuellen Maschine VM1 und VM2 angezeigt.

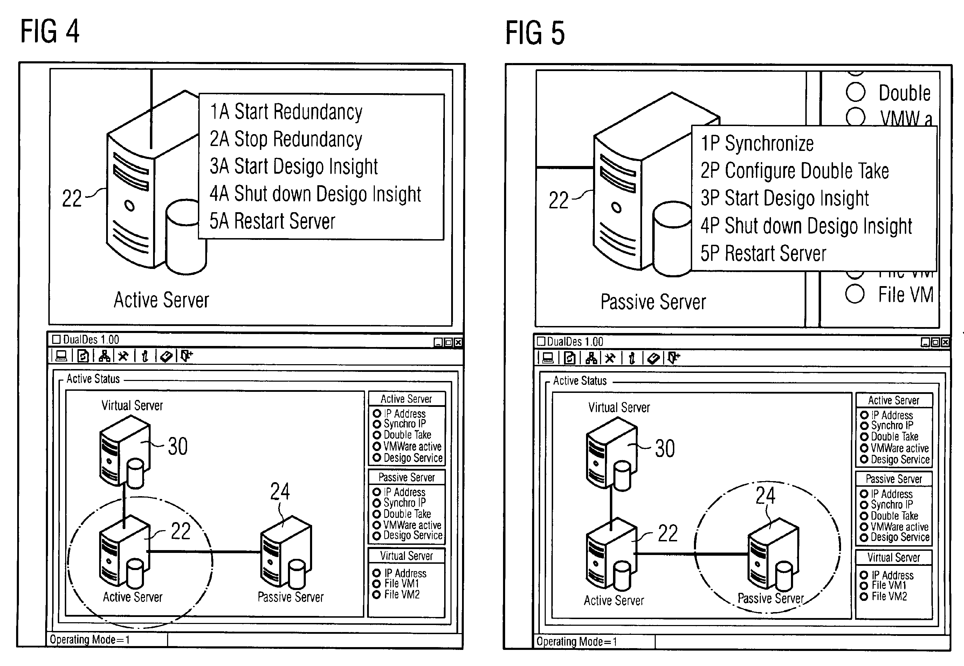

Figur 4 illustriert nun eine Menü-Darstellung für die an dem aktiven Server 22 in der Anwendung gemäss Figur 3 vorgesehenen Bedienoptionen 1A bis 5A, die beispielsweise nach einem rechten Mausklick auf das Symbol des aktiven Servers 22 aufgezeigt werden können, sofern der User über die benötigten Rechte verfügt. Mit Bedienoption 1A "Start Redundancy" wird die dritte Anwendung gestartet, die u.a. den synchronisierten Datenaustausch und die Überwachung der IP-Adressen aller Server 22, 24, 30 auf beiden Server 22, 24 startet und somit die redundanten Betrieb von aktivem Server 22 und passivem Server 24 ermöglicht. Demgegenüber kann mit der Bedienoption 2A "Stop Redundancy" die redundante Absicherung durch den Server 24 unterbrochen werden. Die dritte Anwendung wird gestoppt, wodurch der Austausch der Daten und die Überprüfung der IP-Adressen eingestellt wird. Der Regelungs- und Steuerungsdienst für die Gebäudetechnikkomponenten 4 bis 8 läuft aber ungestört weiter. Ein solcher Fall kann beispielsweise bei der Notwendigkeit einer Netzwerkrevision oder einer Revision des passiven Servers 24 bestehen. Bei diesen Fällen wird dann auf diese Weise ganz konkret ein Umschalten auf den passiven Server 24 verhindert. Zur Wiederherstellung der Redundanz ist bei einer Wiederzurverfügungstellung des passiven Servers 24 bzw. des mit ihm verbundenen Netzwerks die Bedienoption 1A wieder aufzurufen.

Die Bedienoption 3A "Start Desigo Insight" startet hier die die eine zweite für die Steuerung und/oder Überwachung der Gruppe von Gebäudetechnikkomponenten 4 bis 8 spezifizierte Anwendung sowie den zu deren Ausführung erforderlichen virtuellen Server 30. Die Bedienoption 4A "Stop Desigo Insight" beendet diese Anwendungen entsprechend und fährt auch den virtuellen Server 30 herunter. Die letzte hier explizit genannte Bedienoption 5A "Restart Server" wird zum Neustart des gesamten Servers 22 genutzt. Dieser Vorgang löst in diesem Ausführungsbeispiel keine Umschaltung auf den passiven Server aus.

Entsprechend illustriert die Figur 5 eine Menü-Darstellung für die an dem passiven Server 24 in der Anwendung gemäss Figur 3 vorgesehenen Bedienoptionen 1P bis 5P. Die Bedienoption 1P "Synchronize" dient dabei wird zur Wiederherstellung der Redundanz und der Synchronisation der Daten auf den virtuellen Datenspeichern VM HD-DISQL. Im Einzelnen wird zunächst die zweite Anwendung gestoppt und der virtuellen Server 30 beendet. Weiter wird die dritte Anwendung zur Synchronisation und Überprüfung der IP-Adressen beendet und ein Backup der Daten VM HD-DISQL ausgeführt. Anschliessend die Daten von dem passiven Server 24 zu dem vormals aktiven Server 22 synchronisiert. Nach erfolgter Synchronisierung wird die dritte Anwendung zur Synchronisation der Daten und der Überwachung der IP-Adressen sowie das Monitoring der zweiten Anwendung wieder gestartet. Weiter wird der eigentliche virtuellen Server 30 wieder gestartet und somit auch die zweite für die Steuerung und/oder Überwachung der Gruppe von Gebäudetechnikkomponenten spezifizierte Anwendung. Der Server 22 ist somit wieder als aktiver Server 22 hergestellt.

Die Bedienoption 2P "Configure Double Take" ermöglicht hier die Konfiguration der dritten Anwendung. Hier wird beispielsweise der Umfang der zu synchronisierenden Daten sowie die überwachenden IP-Adressen spezifiziert.

Die Bedienoption 3P "Start Desigo Insight" beendet die zweite Anwendung und der virtuellen Server 30 auf dem aktiven Server Der virtuellen Server 30 wird dafür auf dem passiven Server 24 gestartet sowie die zweite Anwendung. Der vormals passive Server 24 ist nun mehr der einzige aktive Server im Netzwerk 2. Dieser Zustand erlaubt die Wartung des vormals aktiven Servers und den zu ihm führenden Datenverbindungen.

Die vierte Bedienoption 4P "Shut Down Desigo Insight" stoppt die eine zweite für die Steuerung und/oder Überwachung der Gruppe von Gebäudetechnikkomponenten spezifizierte Anwendung und beendet auch den virtuellen Server 30. Ebenso wie die Bedienoption 5A dient die Bedienoption 5P der passive Server kontrolliert neu zu starten.

Auf diese vorstehend beschriebene Weise werden ein Netzwerk 2 und ein Verfahren bereitgestellt, die es ermöglichen, die Redundanz des Netzwerksystems 2 unabhängig von der eingesetzten Hard- und Software und in anschaulicher Weise managen zu können. Im besonderen besteht nun keine ausführungstechnisch relevante Abhängigkeit von der für die Steuerung und/oder die Überwachung der Gebäudetechnikkompenenten eingesetzten Routinen mehr. Der Einsatz eines virtuellen Servers 30 und virtueller Datenspeicher VM HD-DISQL ermöglicht so die hohe Flexibilität und Immunität des Systems gegenüber Hardware- und sonstigen Systemausfällen. Weiter ist es sogar möglich, auf den verschiedenen Servern 22, 24 sogar unterschiedliche Versionen der für die Steuerung und/oder die Überwachung der Gebäudetechnikkompenenten eingesetzten Routinen ausführen zu können, dies unter der Voraussetzung, dass die unterschiedlichen Versionen die gleichen Datenbankversionen unterstützen.

## Patentansprüche

1. Vorrichtung (2) für die Steuerung und/oder Überwachung einer Gruppe von Gebäudetechnikkomponenten (4 bis 8), wie z.B. Klimazentrale, Brandmelder, Eindringverhinderung, Videoüberwachung, mit mindestens zwei Servern (22, 24), die jeweils redundante Kommunikationswege zu den Gebäudetechnikkomponenten (4 bis 8) zur Verfügung stellen und auf denen die nachfolgend genannten Anwendungen ausführbar sind:
a) eine erste Anwendung für ein Betriebssystem (OS1 W3K, OS2 W3K) und zur Erzeugung eines virtuellen Servers (30),
b) eine zweite für die Steuerung und/oder Überwachung der Gruppe von Gebäudetechnikkomponenten (4 bis 8) spezifizierte Anwendung,
c) eine dritte Anwendung für die Synchronisation der virtuellen Daten-Speicher (VM HD-DISQL) und die Überwachung der Server-Adressen ausführbar ist , und
d) eine vierte Anwendung zur Auswahl eines für die Steuerung und/oder Überwachung der Gruppe der Gebäudetechnikkomponenten (4 bis 8) massgeblichen Servers (22) und zur Überwachung und Visualisierung des Status einer Serverredundanz sowie zum Ausführen der mit einem gewollten oder ungewollten Ausfalls eines der Server verbundenen Eingriffe (1A bis 5A, 1P bis 5P) in die auf den Servern (22, 24) ausgeführten Anwendungen.

2. Vorrichtung nach Anspruch 1,
**dadurch gekennzeichnet, dass**
die vier Anwendungen zum Ausführen der mit einem gewollten oder ungewollten Ausfalls eines der Server verbundenen Eingriffe (1A bis 5A, 1P bis 5P) in die auf den Servern (22, 24) ausgeführten Anwendungen zwei Programmteile umfassen, von denen ein erster Programmteil dem aktiven Server (22) und ein zweiter Programmteil dem oder den redundanten Servern (24) zugeordnet.

3. Vorrichtung nach Anspruch 2,
**dadurch gekennzeichnet, dass**
im ersten Programmteil die erste und dritte Anwendung jeweils für sich start- und beendbar sind und der aktive Server (22) mit allen für ihn vorgesehenen Anwendungen ohne ein Umschalten der Servers von dem aktiven in den passiven Status startbar ist.

4. Vorrichtung nach Anspruch 2 oder 3,
**dadurch gekennzeichnet, dass**
im zweiten Programmteil die zweite Anwendung startbar ist, die dritte Anwendung konfigurierbar ist, der aktive Server (22) beendbar und der passive Server (24) als aktiver Server aufstartbar ist, der virtuelle Server (30) beendbar ist und die zweite Anwendung auf dem passiven Server (24) startbar ist.

5. Verfahren für die Steuerung und/oder Überwachung einer Gruppe von Gebäudetechnikkomponenten (4 bis 8), wie z.B. Klimazentrale, Brandmelder, Eindringverhinderung, Videoüberwachung, mit den folgenden Verfahrensschritten:
a) Bereitstellen von mindestens zwei Server, die jeweils redundante Kommunikationswege zu den Gebäudetechnikkomponenten (4 bis 8) zur Verfügung stellen;
b) Ausführen einer ersten Anwendung für die Erzeugung und den Betrieb eines virtuellen Servers,
c) Ausführen einer zweiten für die Steuerung und/oder Überwachung der Gruppe von Gebäudetechnikkomponenten (4 bis 8) spezifizierten Anwendung,
d) Ausführen einer dritten Anwendung für die Synchronisation der virtuellen Daten-Speicher und die Überwachung der Server-Adressen, und
e) Ausführen einer vierten Anwendung zur Auswahl eines für die Steuerung und/oder Überwachung der Gruppe der Gebäudetechnikkomponenten (4 bis 8) massgeblichen Servers (20, 22) und zur Überwachung und Visualisierung des Status einer Serverredundanz sowie zum Ausführen der mit einem gewollten oder ungewollten Ausfalls eines der Server (20, 22) verbundenen Eingriffe in die auf den Servern ausgeführten Anwendungen.

6. Verfahren nach Anspruch 5,
**dadurch gekennzeichnet, dass**
die vierte Anwendung zum Ausführen der mit einem gewollten oder ungewollten Ausfalls eines der Server verbundenen Eingriffe in die auf den Servern ausgeführten Anwendungen zwei Programmteile umfasst, von denen ein erster Programmteil dem aktiven Server und ein zweiter Programmteil dem oder den redundanten Servern zugeordnet ist.

7. Verfahren nach Anspruch 6,
**dadurch gekennzeichnet, dass**
im ersten Programmteil die erste und dritte Anwendung jeweils für sich start- und beendbar sind und der aktive Server mit allen für ihn vorgesehenen Anwendungen ohne ein Umschalten der Servers von dem aktiven in den passiven Status startbar ist.

8. Verfahren nach Anspruch 6 oder 7,
**dadurch gekennzeichnet, dass**
im zweiten Programmteil die zweite Anwendung startbar ist, die dritte Anwendung konfigurierbar ist, der aktive Server beendbar und der passive Server als aktiver Server aufstartbar ist, der virtuelle Server beendbar ist und die zweite Anwendung auf dem passiven Server anschliessend startbar ist.
